# EUROPEAN PATENT APPLICATION

(11) **EP 4 498 192 A1**
(43) Date of publication of application: **29.01.2025**
(21) Application number: 23187438.9
(22) Date of filing: 25.07.2023
(51) Int. Cl.: G05B 19/418

(54) **METHODS AND SYSTEMS FOR AUTOMATED TOOL DELIVERY TO A MACHINE TOOL**

(71) Applicant: Siemens Aktiengesellschaft, 80333 München (DE)
(72) Inventor: The designation of the inventor has not yet been filed
(74) Representative: Siemens Patent Attorneys

(57) **Abstract**

Method comprising:
- receiving (S1) initial data, wherein the initial data is descriptive of at least one of a plurality of machine tools (201, 202, 203) at a shop floor for performing a machining task and of the machining task and comprises
* location data of the machine tool on the shop floor,
* required time interval for performing the machining task,
* an ordered list of machining tools (205) required for performing the machining task, wherein the ordering in the list determines a sequence in which the machining tools are to be inserted into the machine tool (201, 202, 203) to perform a part of the machining task corresponding to the machining tool in the sequence,

- determining (S2) according to the ordered list of machining tools a machining tools availability data regarding
* the availability of the respective machining tool (209) at the shop floor, especially at a tool room and/or at the respective machine tool (202, 203), and
* the remaining lifetime of the respective machining tool,

- generating (S3) an augmented ordered list of machining tools required for performing the machining task, wherein the augmented ordered list comprises an update of the ordered list which takes the determined machining tools availability data into account,
- calculating (S4) machining tools delivery schedule data from the augmented ordered list of machining tools,
- triggering (S5) to execute a delivery of the machining tools to the machine tool according to the machining tools delivery schedule data, before or while performing the machining task by the machine tool.

## Description

The subject-matter disclosed herein relates to methods and systems for automated tool delivery to a machine tool. The machine tool is located at a shop floor of an automated manufacturing systems and is one of a plurality of machine tools at the shop floor. A specific machining task is assigned to the machine tool, the task comprising a sequence of machining steps, wherein different machining steps are preformed by different machining tools.

Managing and assigning machining tasks is a part of production planning that is usually managed by a MES (Manufacturing Execution System).

Information on production planning contains typically information like the work order (incl. target machine, lot size, time interval of the manufacturing), an NC package and a required tool list. In addition, from the factory purchasing orders can be placed to receive replacement components, while logistics orders can be placed to make sure that internal transport of workpiece material, tools and further equipment (clamping, measuring devices, etc.) to the machine will take place. The factory purchasing orders are usually placed in an ERP (Enterprise Resource Planning) system like SAP.

MES and ERP are integrated. Integrating MES and ERP systems is essential for streamlining and optimizing manufacturing operations within an organization.

MES focuses on the execution and control of manufacturing operations on the shop floor. It collects real-time data from various sources, such as machines, sensors, and operators, to monitor and control the manufacturing processes. MES systems provide functionalities like production scheduling, inventory management, quality control, machine monitoring, and work order management.

On the other hand, ERP systems are designed to manage and integrate core business processes across different departments and functions of an organization. They handle functions such as finance, human resources, procurement, supply chain management, and customer relationship management. ERP systems provide a centralized database and standardized processes to support efficient and coordinated operations throughout the organization.

In the context of machine tools, the term "lot size" refers to the quantity of parts or products that are produced or processed in a single batch or production run using that particular machine tool. It represents the number of items that are manufactured or machined in one set-up or cycle before the machine tool is reconfigured or adjusted for the next batch.

In the context of machine tools, the term "NC package" refers to a software package or system that is used to generate and control numerical control (NC) programs for the machine tool. It is a set of software tools and functionalities that enable the programming, simulation, and execution of machining operations on a machine tool.

In the context of "machine tools", a tool room refers to a dedicated workspace or facility within a manufacturing or engineering establishment where various tools, cutting instruments, dies, molds, jigs, fixtures, and other equipment are stored, maintained, repaired, and sometimes manufactured. The tool room serves as a centralized hub for tooling-related activities and supports the production and maintenance of machine tools and other machinery.

Delivering the right machining tools to the machine at the right time can be a tedious task. Especially when the machining task gets changed, the planning needs to be adapted. Work orders can be canceled, changed or new work orders can be planned into an existing machining sequence. Tool room and the whole shop floor must react on these changes and adapt quickly. Scenarios can be that changes are sent from MES e. g. once a day so that the long-term planning can be re-run once a day. During a day only changes for these days can lead to re-run the affected sequences of this day, only.

Usually, during the preparation tools lists are handed over to a tool room so that the pre-setters (operators of pre-setting devices) can start to organize. When stock levels for components/complete tools/workpiece material run out of parts, they are reordered by a purchasing person. Also, at the end of the tool preparation for a work order / work sequence the tools are placed into a trolley and a transport from it is ordered, manually.

There is no direct solution for the problem to deliver the machining tools in an automated and reliable way, so that the delivery can also adapt accordingly to changed machining sequences.

The objective of the present invention is to provide methods and systems that allow automated reliable tool delivery at the shop floor.

According to one of the aspects of the subject-matter disclosed herein a method is provided, the method comprising:
- receiving initial data, wherein the initial data is descriptive of at least one of a plurality of machine tools at a shop floor for performing a machining task and of the machining task and comprises location data of the machine tool on the shop floor, required time interval for performing the machining task, and an ordered list of machining tools required for performing the machining task, wherein the ordering in the list determines a sequence in which the machining tools are to be inserted into the machine tool to perform a part of the machining task corresponding to the machining tool in the sequence
- determining according to the ordered list of machining tools a machining tools availability data regarding the availability of the respective machining tool at the shop floor, especially at a tool room and/or at the respective machine tool, and the remaining lifetime of the respective machining tool,
- generating an augmented ordered list of machining tools required for performing the machining task, wherein the augmented ordered list comprises an update of the ordered list which takes the determined machining tools availability data into account, and
- calculating machining tools delivery schedule data from the augmented ordered list of machining tools, and
- triggering to execute a delivery of the machining tools to the machine tool according to the machining tools delivery schedule data, before or while performing the machining task by the machine tool.

The machining tools delivery schedule data can comprise tool delivery times (how long), positions from where the respective machining tool is delivered, time of the respective tool delivery at the machining tool, delivery route at the shop floor.

The main advantages are the use of interfaces between machine tools and the automation systems. This allows for information to be automatically shared between different systems (MES, ERP, ...). In addition, the next delivery orders for the next machining tasks can be automatically triggered so that there are no delays or losses by missing a next step.

In an embodiment, the method further comprises executing the delivery of the machining tools to the machine tool according to the machining tools delivery schedule data.

In an embodiment, the method further comprises performing the machining task using the machining tools delivered according to the machining tools delivery schedule data.

In an embodiment, the method further comprises:
- receiving an amended machining task described in amended initial data,
- performing steps S2 to S5 of the method, while taking the amended initial data into account, respectively.

In other words, one or more of the following steps are carried out:
- determining an amended machining tools availability data,
- generating an amended, augmented ordered list of machining tools,
- calculating amended machining tools delivery schedule data, and
- triggering to execute a delivery of the machining tools to the machine tool according to the amended machining tools delivery schedule data.

This solves the additional problem of how to adapt to changed work orders / work sequences and can bring one or more of the following advantages:
- Improve of the process to react on changed work orders and changed work sequences quickly
- Time saving through fast reaction on changes
- Improved planning process, e. g. better resources planning
- Avoiding mistakes when entering or changing the work orders / work sequences through the operator / customer.

In an embodiment, if one or more machining tools are unavailable according to the machining tools availability data, sending a request e.g., to an enterprise resource planning system to provide the unavailable tools according to the ordered list of machining tools.

In an embodiment, while the machine tool is performing the machining task, monitoring, by a sensor system at the shop floor, real-time data comprising times for machining tools being delivered and installed in the machine tool, e.g., into a machining tool holder of the machine tool, so that the machine tool is ready to perform the part of the machining task corresponding to the machining tool in the sequence, and updating a pre-trained or training an untrained learning algorithm with the real-time data to optimize machining tools delivery schedule data.

In an embodiment, the delivery is carried out by automated guided devices, e.g., automated guided vehicles (AGVs) and the learning algorithm calculates machining tools delivery schedule data considering characteristics of the automated guided devices (capacity, velocity, etc.).

In an embodiment, the method further comprises reserving the at least one machine tool for the required time interval, so that no other machining task is assigned to it during the required time interval.

According to another aspect a system is provided, wherein the system comprises a server connected to a plurality of machine tools, to a machining tool storage to a machining tool delivery system, wherein the server comprises a computer program with instructions which, when the program is executed by the server, cause the machining tool delivery system to deliver machining tools to at least one of the plurality of the machine tools according to the steps of the method described above.

The above and other aspects and advantages of the subject matter disclosed herein will be further discussed in conjunction with the accompanying drawings, which indicate only some possible ways that may be practiced. The like reference characters in the drawings refer to like parts throughout.
- FIG 1: shows flowchart of a method,
- FIG 2: illustrates a system for performing one or more machining tasks at a shop floor of an automated manufacturing system.

The reference signs used in the figures and in the claims are used for demonstrative purposes and shall not be considered as a limitation of corresponding claim features.

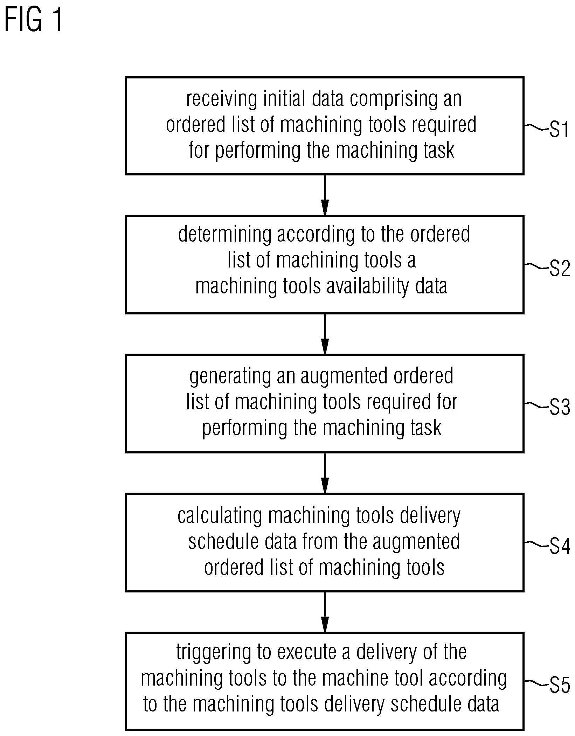

FIG 1 illustrates a flowchart of a method corresponding to the subject-matter disclosed herein.

The method can be implemented in a MES that controls manufacturing operations that can be performed by an automation system on a shop floor. The automation system comprises typically a plurality of assets, e.g., machine tools, e.g., CNC machine tools, robots, transport vehicles, sensor systems and alike that are needed to perform various manufacturing tasks automatically, i.e., with no or almost no human intervention.

The method comprises a step S1 of receiving initial data. The initial data is descriptive of at least one of a plurality of machine tools at the shop floor. The machining task can be performed by one or more machine tools in collaboration. The initial data is also describes the machining task itself and comprises location data of the at least one machine tool on the shop floor, required time interval for performing the machining task, and an ordered list of machining tools required for performing the machining task, wherein the ordering in the list determines a sequence in which the machining tools are to be inserted into the at least one machine tool to perform a part of the machining task corresponding to the machining tool in the sequence.

Optionally, the initial data or the description of the machining task respectively can comprise lot size of the machine tool, an NC package or alike. When the NC program is defined also the tool list is defined, so required tool types and their usage times and production parameters (depth of cut, spindle speed, feed rate, etc.) are defined. This information (NC program, tool list) can be created simultaneously and can be provided by a CAM system.

The tool list is needed and might be provided separately, but it is (at least implicitly) contained in the NC program.

Typically, the machining task comprises a sequence of machining steps, wherein different machining steps are performed by different machining tools - e.g., a first machining step (described by a first NC program code) is performed by a first machining tool, a second machining step (described by a second NC program code) is performed by a second machining tool, third - by a third tool and so on.

In step S2 the ordered list of machining tools is used to determine machining tools availability data. First, this data regards to the availability of the respective machining tool at the shop floor. E.g., the respective tool can be located at a tool room and/or at the respective machine tool. Second, the machining tools availability data regards to the remaining lifetime of the respective machining tools.

If, however, the respective machining tool is not available at the tool room, an order can be placed, e.g., at an ERP system to order this tool. In other words, a further tool instance is created. This is more preferable than, if this machining tool is available at another machine tool, unloading the machining tool from this another machine tool, transferring it and loading this existing tool instance on the machine tool, on which it is currently needed.

For a tool that is rarely used, it might be better to unload it from another machine and load it to the machine at hand.

But for tools that are often used and quickly worn out (e.g., a drilling tool), the unload-load-approach means extra work or inefficiency. It is better to keep the other tool on the other machine, since it is highly probable that it will be used there anyhow soon, until it is worn out. And for the machine at hand a new tool instance is created and, when the machining tool is provided (e.g., by the ERP system), it is loaded on the machine at hand and kept there until it is worn out. This way any tool is loaded only once for its whole lifetime. No extra unload-load actions are needed.

In other words, for each entry in the ordered list information can be gathered where the respective machining tool is to be found and what the tool's remaining lifetime is. The information about the tool's remaining lifetime is crucial, because if the lifetime is shorter than it is needed to perform the respective part of the machining task, then the tool should not be considered as available and the search for the tool of the same type but with a longer remaining lifetime shall be continued.

Step S3 comprises generating an augmented ordered list of machining tools required for performing the machining task. The augmented ordered list comprises an update of the ordered list which takes the determined machining tools availability data into account. E.g., the entries of the ordered list can be augmented by the availability data of the respective machining tool.

In step S4 machining tools delivery schedule data is calculated from the augmented ordered list of machining tools. This data can comprise but not limited to: tool delivery time estimates, i.e., how long would it take to deliver the respective machining tool to the machine tool, positions from where the respective machining tool is to be delivered, earliest time of the delivery of the machining tool at the machine tool, e.g., when the respective machining tool is involved in performing a machining task at another machine tool, delivery route of the respective machining tool at the shop floor.

Step S5 comprises triggering to execute a delivery of the machining tools to the machine tool according to the machining tools delivery schedule data.

The delivery can be executed completely before the machine tool starts executing the machining task or at least partially while the machine tool is performing the machining task. In the latter case for example, a first machining tool is delivered prior to the start of the machining process, then the machining starts, while a second machining tool is being delivered and so further.

In other words, Step S5 can comprise executing the delivery of the machining tools to the machine tool according to the machining tools delivery schedule data. This can for example, comprise causing pre-setters e.g., in the tool room to start organizing the tools, etc.

In an embodiment, Step S5 can comprise performing the machining task using the machining tools delivered according to the machining tools delivery schedule data.

It will be appreciated by the skilled person that more than one machining tasks can be considered. There can be a pipeline of machining tasks, so that previous tasks and future tasks can be considered when performing the machining task. Especially, when the current machining task is modified or amended, considering the future machining tasks can be advantageous.

Changes in the orders or in the machining tasks should generally lead to as little as possible changes in existing scheduling and delivering results. The reason is that tool preparation should run rather stable and pre-setters are not confused due to changes in the machining task.

Therefore, in an embodiment, the method can further comprise receiving an amended machining task described in amended initial data, and performing steps S2 to S5 above, while taking the amended initial data into account, respectively.

In detail the method can comprise:
- determining an amended machining tools availability data,
- generating an amended, augmented ordered list of machining tools,
- calculating amended machining tools delivery schedule data, and
- triggering to execute a delivery of the machining tools to the machine tool according to the amended machining tools delivery schedule data.

The amended machining task can be due to a scheduling.

This can be a regular scheduling. Such scheduling is normally executed in regular intervals, e.g., once a shift/day/week (this can be configured) and is provided to adapt on changes that happened in this time interval.

Otherwise, it can be a manual scheduling: For changes that need to be adapted immediately, a user (e.g., production planner) can re-run the scheduling manually. Also, a block-wise re-scheduling (multiselection with filtering) can be allowed.

In the context of the present disclosure, there is a difference between a work sequence that needs to be scheduled (that might require several tools) and a set or block of work sequences, where the scheduling is triggered at once.

The set or block can be several work sequences that are to be manufactured on the same machine (one after the other). But the block could also be a set of work sequences that are to be manufactured on several machines. Also combinations of the two cases might exist.

An example of an amended machining task is when only a part of the machining task is affected by the amendment. For example, the machining task can be cancelled after a predetermined step. In this case it can be useful to take into account the machining tools that have been delivered to the machine tool but will not be used due to the cancellation for the next machining task.

For example, the machining task can be to carry out a machining with machining tools T1, T2 at machine tool 1. The next machining task can be to carry out a machining with machining tools T2, T3 transferred from machine tool 2. Assume the first machining task is deleted (amendment) after the machining tools T1 and T2 are delivered to the machine tool 1. Then the existing T2 can be used for the next machining task if its remaining lifetime is larger than the required lifetime of this tool for the next machining task. If not the tool T2 shall be found somewhere else, or an order can be placed at the ERP. The machining tool T1 can be marked as unreserved.

In an embodiment, the amendment in the machining task can constitute of adding one or more machining steps or orders into the machining sequence defining the machining task. In this case the ordered list of required machining tools is amended and the steps S2 to S5 are amended accordingly.

In an embodiment, the determining of the machining tools availability data is done from scratch and the augmented ordered list of machining tools is re-generated accordingly.

Alternatively, the machining tools availability data only of the new machining tool instances in the ordered list of machining tools can be determined and the augmentation comprises adding entries corresponding to the new machining tool instances with the respective machining tools availability data into the augmented ordered list. This can be convenient, if the machining task is amended, when the machine tool already started to execute it.

In an embodiment, the method can further comprise reserving the machine tool for the required time interval, so that no other machining task is assigned to it during the required time interval.

In an embodiment, when the execution of the machining task has been successfully finished before the time interval for reservation passed, then the reservation can be deleted (other future reservations are not to be deleted).

In this case the machining tools that are present at the at least one machine tool gets a status "available" till the next machining task starts at the at least one machine tool.

In an embodiment, when the execution of one or more machining steps in the machining task needs longer than planned, then the required time interval for the reservation of the existing tool is extended so that the machine tool can keep it. This may influence other machining tasks at the shop floor if this particular machining tool is needed there and lead to an amendment of these other machining tasks.

Alternatively, the machining tool is used as planned but the machining task is amended by including one more step with a machining tool of the same type. The existing tool is then unloaded and transferred, when the time required to perform the machining step has lapsed, a machining tool of the same type is delivered to the machine tool.

In an embodiment, if one or more machining tools are unavailable according to the machining tools availability data, sending a request e.g., to the ERP system, to provide the unavailable tools according to the ordered list of machining tools.

In an embodiment, while the machine tool is performing the machining task, a sensor system, which can be allocated to the MES, can monitor real-time data regarding the delivery of the machining tools. This data can comprise, but not limited to, times for machining tools being delivered and installed and/or loaded in the machine tool, preferably into a machining tool holder of the machine tool, so that the machine tool is ready to perform the part of the machining task corresponding to the machining tool in the sequence, and updating or training a pre-trained or untrained machine learning algorithm with the real-time data to optimize machining tools delivery schedule data.

In an embodiment, the delivery can be carried out by automated guided devices, e.g., automated guided vehicles. There, the machine learning algorithm can calculate machining tools delivery schedule data considering characteristics of the automated guided devices (capacity, velocity, etc.)).

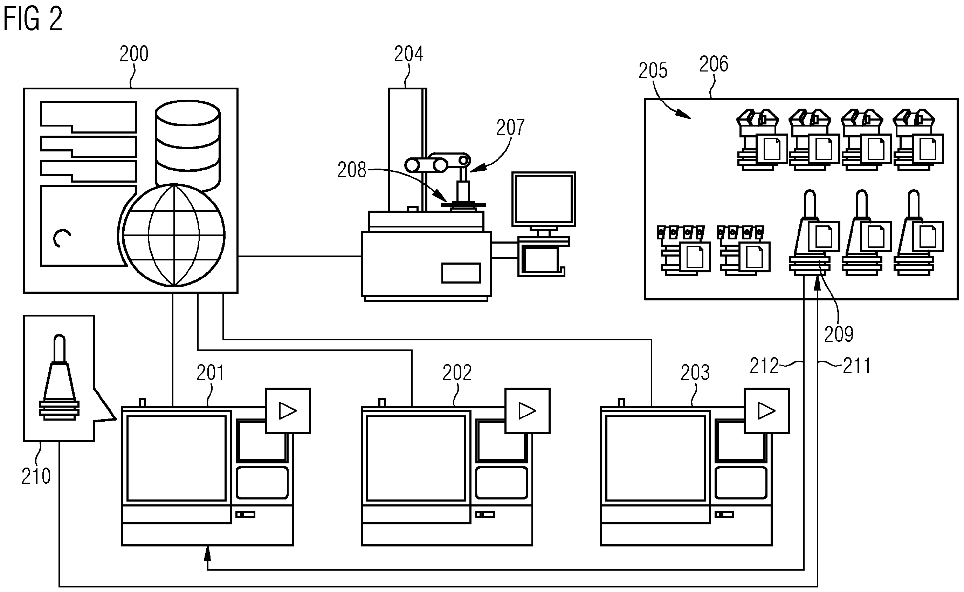

FIG 2 illustrates an example of a system in which the method described herein can be carried out.

The system can comprise a server 200 as a central management platform. All machines 201, 202, 203, 204 in the shop floor are connected to the server 200 to exchange data continuously and to be managed centrally. The server 200 provides a functionality of integration between the MES and the ERP. The server 200 can comprise an MES.

The server 200 also provides a tool management functionality.

All machining tools 205 present at the shop floor are measured by a measuring machine 204 and catalogued in a catalog 206 and e.g., stored in a tool room.

In the context of machine tools, such measuring machines also called pre-setting device. The pre-setting devices or tools are used for setting and measuring the dimensions of tools, e.g., cutting tools before they are installed in a machine. It is commonly used in machining processes such as milling, turning, and drilling.

The pre-setting device allows operators to accurately measure and set the tool's length, diameter, and other critical parameters. By doing so, they can ensure precise and consistent machining operations. This is important because incorrect tool dimensions can result in poor quality parts, increased tool wear, and potential machine damage.

Typically, a pre-setting tool consists of a measuring unit 207 and a base or stand 208. The measuring unit 207 may incorporate a high-precision dial gauge, laser system, or camera-based technology to capture the tool's dimensions. The base or stand 208 provides a stable platform for placing the cutting tool during measurement.

Using a pre-setting tool involves placing the cutting tool into the pre-setting device's holder or mounting system. The operator then uses the measurement mechanism to determine the tool's dimensions, which are usually displayed on a digital readout or computer screen. Based on these measurements, adjustments can be made to ensure accurate tool setup in the machine.

By employing a pre-setting device, machine tool operators can save time during tool changes, reduce setup errors, and enhance overall machining efficiency. It is especially useful in environments where multiple tools are used, and frequent tool changes are required.

FIG 2 illustrates that the machining tools 205 can be ordered in the catalogue 206 according to their type. Three different types of tools are illustrated in FIG 2.

When determining the machining tools availability data, the entries in the ordered list of machining tools required for performing the machining task the catalogue 206 can be searched for respective entries.

For example, a machining task can be assigned to the machine 201 and comprise a first machining step where a raw part (not shown) has to be machined with a first tool 209.

The first tool 209 is available at stock, e.g., in the tool room and it is a new unused tool, i.e., having a maximum remaining lifetime.

According to the delivery schedule data 210 the delivery of the first tool 209 is ordered 211 and executed 212. After the first tool 209 is delivered, e.g., by an AGV to the machine tool 201, the machine tool 201 can start executing the first machining step in the machining task. Further tools can then be delivered to the machine 201 while it is executing the first machining step or before it.

It will be appreciated by the skilled person that the first tool can be available at one of the machines 202, 203, in which case, if it is not currently in use, it can be unloaded, transported to the machine 201 and loaded into the machine 201.

When there is, however, no tool of the required type or of the required remaining lifetime available at the shop floor, an order can be made through the server 200 to the ERP system that the tool is needed for the production.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and *vice versa.*

## Claims

1. Method comprising:
- receiving (S1) initial data, wherein the initial data is descriptive of at least one of a plurality of machine tools (201, 202, 203) at a shop floor for performing a machining task and of the machining task and comprises
* location data of the machine tool on the shop floor,
* required time interval for performing the machining task, and
* an ordered list of machining tools (205) required for performing the machining task, wherein the ordering in the list determines a sequence in which the machining tools are to be inserted into the machine tool (201, 202, 203) to perform a part of the machining task corresponding to the machining tool in the sequence,
- determining (S2) according to the ordered list of machining tools a machining tools availability data regarding
* the availability of the respective machining tool (209) at the shop floor, especially at a tool room and/or at the respective machine tool (202, 203), and
* the remaining lifetime of the respective machining tool,
- generating (S3) an augmented ordered list of machining tools required for performing the machining task, wherein the augmented ordered list comprises an update of the ordered list which takes the determined machining tools availability data into account,
- calculating (S4) machining tools delivery schedule data from
* the augmented ordered list of machining tools,
- triggering (S5) to execute a delivery of the machining tools to the machine tool according to the machining tools delivery schedule data, before or while performing the machining task by the machine tool.

2. Method of claim 1, further comprising executing the delivery of the machining tools to the machine tool according to the machining tools delivery schedule data.

3. Method of claim 1 or 2, further comprising performing the machining task using the machining tools delivered according to the machining tools delivery schedule data.

4. Method of any one of claims 1 to 3, further comprising:
- receiving an amended machining task described in amended initial data,
- performing steps S2 to S5 of the method, while taking the amended initial data into account, respectively.

5. Method of any one of claims 1 to 4, if one or more machining tools are unavailable according to the machining tools availability data, sending a request to provide the unavailable tools according to the ordered list of machining tools.

6. Method of any one of claims 1 to 5, while the machine tool is performing the machining task, monitoring, by a sensor system, real-time data comprising times for machining tools being delivered and installed in the machine tool and training a learning algorithm with the real-time data to optimize machining tools delivery schedule data.

7. Method of any one of claims 1 to 6, wherein the delivery is carried out by automated guided devices, e.g., automated guided vehicles.

8. Method of any one of claims 1 to 7, further comprising reserving the at least one machine tool for the required time interval, so that no other machining task is assigned to it during the required time interval.

9. System comprising a server (200) connected to a plurality of machine tools (201, 202, 203), to a machining tool storage to a machining tool delivery system, wherein the server (200) comprises a computer program with instructions which, when the program is executed by the server (200), cause the machining tool delivery system to deliver machining tools to at least one (201) of the plurality of the machine tools (201, 202, 203) according to the steps of the method of any one of claims 1 to 8.
